# EUROPEAN PATENT APPLICATION

(11) **EP 4 848 356 A1**
(43) Date of publication of application: **02.12.2026**
(21) Application number: 26180284.7
(22) Date of filing: 21.05.2026
(51) Int. Cl.: H01M 4/139, B08B 1/16, B32B 3/30, H01M 4/04

(54) **APPARATUS AND METHOD FOR MANUFACTURING AN ELECTRODE PLATE FOR SECONDARY BATTERY**

(30) Priority: 22.05.2025 KR 20250066833
(71) Applicant: SAMSUNG SDI CO., LTD., Yongin-si, Gyeonggi-do 17084 (KR)
(72) Inventor: LEE, Junsub, 17084 Yongin-si, Gyeonggi-do (KR); CHOI, Sangdon, 17084 Yongin-si, Gyeonggi-do (KR); KOO, Jiwon, 17084 Yongin-si, Gyeonggi-do (KR); AN, Gyusang, 17084 Yongin-si, Gyeonggi-do (KR)
(74) Representative: Bardehle Pagenberg Partnerschaft mbB Patentanwälte Rechtsanwälte

(57) **Abstract**

The present disclosure relates to an apparatus and method for manufacturing an electrode plate for a secondary battery and provides an apparatus and method for manufacturing an electrode plate for a secondary battery that are capable of precisely and easily forming various shapes of non-coated portion patterns by physically scraping a coating mixture formed on an electrode plate moving along a transfer path, and capable of effectively discharging a mixture separated from a base substrate by including a dilution injection structure, thereby improving the continuity and stability of the process.

## Description

### FIELD

The present disclosure relates to the manufacture of an electrode plate for a secondary battery, and more particularly, to an apparatus and method for manufacturing an electrode plate for a secondary battery that are capable of forming non-coated portions of an electrode plate in a scraping method.

### BACKGROUND

A positive electrode plate or a negative electrode plate may be manufactured by performing a coating process of coating one or two side surfaces of an electrode base substrate with a mixture (a mixture of electrode materials), a roll pressing process of compressing and stretching an electrode plate coated with the mixture through the coating process to make the electrode plate thin and flat, a slitting process of cutting the electrode plate in a longitudinal direction to separate the electrode plate into individual electrode plates, and a notching process of cutting each separated electrode plate in a lateral direction, removing unnecessary portions, and forming tabs.

The herein information disclosed in this Background section is for enhancement of understanding of the background of the present disclosure, and therefore, it may contain information that does not constitute a related (or prior) art.

### SUMMARY

The present disclosure is directed to providing an apparatus and method for manufacturing an electrode plate for a secondary battery that are capable of precisely and easily forming various shapes of non-coated portion patterns on an electrode plate and effectively discharging a mixture separated from a base substrate, thereby improving the continuity and stability of the process.

According to an aspect of the present disclosure, there is provided an apparatus for manufacturing an electrode plate for a secondary battery, which includes a non-coated portion forming device positioned to correspond to a transfer path for an electrode plate having a predetermined width and comprising a structure in which a base substrate and a mixture are stacked, wherein the non-coated portion forming device is configured to form non-coated portions by approaching the electrode plate being transferred and partially removing the mixture from the base substrate, a sensor configured to detect areas of and gaps between the non-coated portions formed by the non-coated portion forming device, and a controller configured to receive sensing information from the sensor and control an operation of the non-coated portion forming device.

In some embodiments, the non-coated portion forming device comprises: an X-motion actuator that outputs a transferring force in a width direction of the electrode plate; and one or more scraping devices that are adjustable in position in the width direction of the electrode plate by the X-motion actuator and that have a scraper for approaching the electrode plate and scraping and removing the mixture.

In some embodiments, the one or more scraping devices are provided as a plurality of scraping devices, and the plurality of scraping devices are arranged to be spaced apart from each other on the X-motion actuator.

In some embodiments, the one or more scraping devices comprises: a movable supporter which is supported by the X-motion actuator and adjustable in position in the width direction of the electrode plate; a Z-motion actuator which is installed on the movable supporter and outputs a transferring force in a direction orthogonal to the width direction and a transfer direction of the electrode plate; and a body which is moved forward and backward with respect to the electrode plate by the Z-motion actuator and supports the scraper.

In some embodiments, the apparatus further comprises a mixture discharger configured to suction at least a portion of the mixture, the at least the portion of the mixture being separated from the base substrate by the scraper and discharge the mixture to the outside.

In some embodiments, an internal passage, through which the separated at least a portion of the mixture passes, and which has one end portion open toward the scraper and another end portion open upward from the body, is formed inside the body, and the mixture discharger has a suction unit that outputs vacuum pressure, and a discharge pipe that connects the suction unit to the other end portion of the internal passage.

In some embodiments, the apparatus further comprises a diluent supplier configured to apply a diluent to the scraper when the scraper scrapes the mixture so that the separated mixture is mixed with the diluent and suctioned into the internal passage.

In some embodiments, a diluent passage, through which the diluent supplied from the outside passes and which is open toward the scraper, is further formed inside the body, and the diluent supplier includes a pump that supplies a diluent and a supply pipe that guides the diluent supplied from the pump to the diluent passage.

In some embodiments, the Z-motion actuator comprises: a motor that is fixed to the movable supporter and operated by the at least one controller to output a bidirectional rotational force; a screw shaft that is connected to a drive shaft of the motor and extends vertically; and a follower block that is screw-coupled to the screw shaft while fixed to the body and moves linearly according to an axial rotation of the screw shaft.

In some embodiments, the movable supporter further comprises a guide member that guides a linear movement of the body.

In some embodiments, a guiding space that guides the mixture and the diluent to the internal passage is provided between the body and the scraper.

According to another aspect of the present disclosure, there is provided a method of manufacturing an electrode plate for a secondary battery, which includes a non-coated portion forming device setting operation of setting operation conditions of a non-coated portion forming device which has a structure in which a base substrate and a mixture are stacked and which includes a scraper for approaching an electrode plate transferred along a transfer path and partially removing the mixture from the electrode plate, and a non-coated portion forming operation having a scraping process of, while the electrode plate moves, allowing the scraper to repeatedly approach the electrode plate and allowing the scraper to partially remove the mixture to form non-coated portions.

In some embodiments, the method further comprises a monitoring operation of detecting areas of and gaps between the non-coated portions formed in the non-coated portion forming operation.

In some embodiments, the method further comprises a setting value adjusting operation of adjusting setting values of the non-coated portion forming device when it is determined that the areas of and gaps between the non-coated portions need to be corrected as a result of monitoring through the monitoring operation.

In some embodiments, the non-coated portion forming operation further comprises a suctioning process of suctioning a mixture removed from the base substrate and discharging the mixture to the outside.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view of an electrode assembly manufactured using an apparatus for manufacturing an electrode plate for a secondary battery according to embodiments of the present disclosure;
FIG. 2 is a diagram of a structure of a pouch-type secondary battery to which the electrode assembly of FIG. 1 is applied;
FIG. 3 is a diagram illustrating an internal structure of a prismatic secondary battery in which an electrode plate manufactured using the apparatus for manufacturing the electrode plate for a secondary battery according to embodiments of the present disclosure is embedded;
FIG. 4 is a perspective view illustrating an external appearance of the prismatic secondary battery illustrated in FIG. 3;
FIG. 5 is a perspective view of a secondary battery pack in which the electrode plate manufactured using the apparatus for manufacturing the electrode plate for a secondary battery according to embodiments of the present disclosure is embedded;
FIG. 6 is a diagram illustrating the secondary battery pack of FIG. 5 applied to a vehicle;
FIG. 7 is a diagram illustrating a shape of an electrode plate manufactured using the apparatus for manufacturing the electrode plate for a secondary battery according to embodiments of the present disclosure;
FIG. 8 is a diagram for describing a method of using the electrode plate illustrated in FIG. 7;
FIG. 9 is a blocking diagram illustrating the overall configuration of the apparatus for manufacturing the electrode plate for a secondary battery according to embodiments of the present disclosure;
FIG. 10 is a diagram for describing the configuration and operation of the apparatus for manufacturing the electrode plate for a secondary battery illustrated in FIG. 9;
FIG. 11 is a front view of a non-coated portion forming device of FIG. 10;
FIG. 12 is a perspective view separately illustrating a scraping device illustrated in FIG. 11;
FIG. 13 is an exploded perspective view of the scraping device of FIG. 12;
FIG. 14 is a partial cross-sectional view for describing an operating method of the scraping device;
FIGS. 15 to 18 are diagrams illustrating various implementation examples of various scrapers applicable to the apparatus for manufacturing the electrode plate for a secondary battery according to embodiments of the present disclosure;
FIG. 19 is a diagram illustrating a modified example of a scraper of FIG. 15;
FIGS. 20 to 22 are diagrams illustrating a process of removing a mixture using the apparatus for manufacturing the electrode plate for a secondary battery according to embodiments of the present disclosure; and
FIG. 23 is a flowchart for describing a method of manufacturing an electrode plate for a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "include(s)," "including," "comprise(s)," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numbers may denote the same components in different embodiments.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average thereof.

It will be understood that, although the terms first, second, etc. may be used herein to describe various elements, components, regions, layers, and/or sections, these elements, components, regions, layers, and/or sections should not be limited by these terms. These terms are used only to distinguish one component from another, and unless otherwise stated, it is apparent that a first component may be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

It will be understood that if an element or layer is referred to as being "on," "connected to," or "coupled to" another element or layer, it may be directly on, connected, or coupled to the other element or layer or one or more intervening elements or layers may also be present.

As used herein, the term "and/or" includes any and all combinations of one or more of the associated items listed. Further, the use of "may" if describing embodiments of the present disclosure relates to "one or more embodiments of the present disclosure." Expressions, such as "at least one of" and "any one of," before a list of elements, modify the entire list of elements and do not modify the individual elements of the list.

Throughout the specification, if "A and/or B" is stated, it means A, B or A and B, unless otherwise stated, and when "C to D" is stated, it means C or more and D or less, unless otherwise specified.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations.

The terms "use" may be considered synonymous with the terms "utilize." As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above" "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientations depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to be limiting of the present disclosure.

The inventors have recognized that in the process for manufacturing an electrode plate for a secondary battery, the process including the slitting method described herein has limitations in that it is difficult to implement various non-coated portion patterns required according to the purpose of an electrode plate or the structure of a cell. There is a need for a manufacturing apparatus and method that can adjust the positions, sizes, shapes, and costs of non-coated portions on an electrode plate.

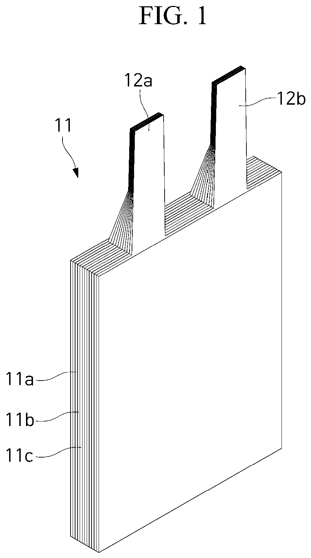

FIG. 1 is a perspective view of an electrode assembly manufactured using an apparatus for manufacturing an electrode plate for a secondary battery according to embodiments of the present disclosure.

Electrode plates manufactured using an apparatus 30 for manufacturing an electrode plate according to the present embodiment may comprise an electrode assembly 11 as illustrated in FIG. 1 through a punching process and a stacking process.

The electrode assembly 11 may include a first electrode plate 11a, a separator 11b, and a second electrode plate 11c that are formed in a plate or film form. The electrode assembly 11 illustrated in FIG. 1 may be a Z-shaped stack electrode assembly in which a first electrode plate 11a and a second electrode plate 11c are inserted at both sides of a Z-shaped bent separator. The first electrode plate 11a may serve as a negative electrode, the second electrode plate 11c may serve as a positive electrode, and vice versa.

The first electrode plate 11a may be formed by coating a first base substrate formed of a metal foil, such as copper, a copper alloy, nickel, a nickel alloy, or the like, with a first electrode active material, such as graphite, carbon, or the like, and include a first electrode tab 12a, which is a region in which the first electrode active material is not coated. The first electrode tab 12a may be connected to an external first terminal (not illustrated).

The second electrode plate 11c may be formed by coating a base substrate formed of a metal foil, such as aluminum or an aluminum alloy, with a second electrode active material, such as a lithium transition metal oxide or the like, and include a second electrode tab 12b, which is a region in which the second electrode active material is not coated. The second electrode tab 12b may be connected to an external second terminal (not illustrated).

The separator 11b functions to prevent a short circuit between the first electrode plate 11a and the second electrode plate 11c while allowing the movement of lithium ions. The separator 11b may be composed of, for example, a polyethylene film, a polypropylene film, a polyethylene-polypropylene film, or the like.

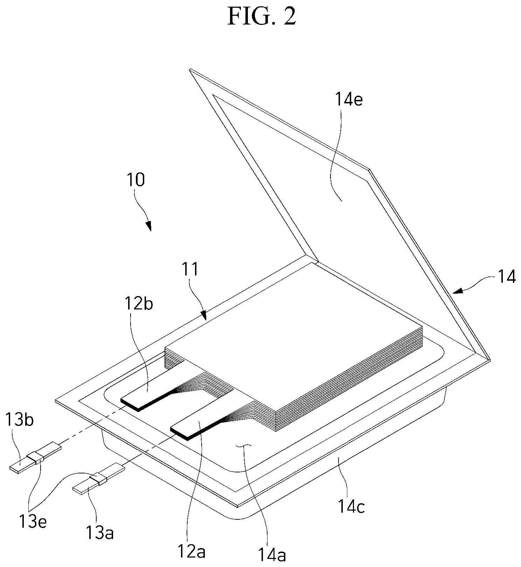

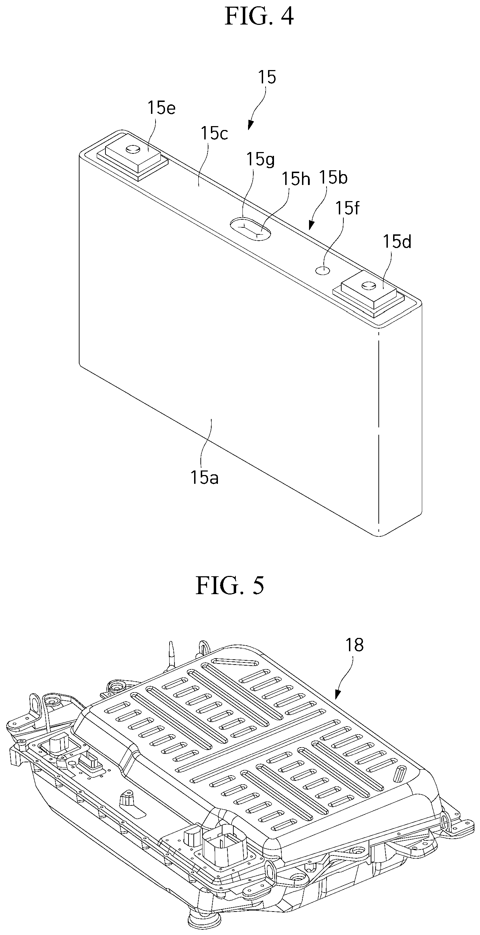

In the case of a pouch-type secondary battery 10, the electrode assembly 11 may be accommodated in a pouch 14 of a flexible material, as illustrated in FIG. 2, and in the case of a prismatic secondary battery, the electrode assembly 11 may be accommodated in a hexahedral metal battery can 15a (see FIG. 4) or a can.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤ c≤ 0.05); LiaMn2-bXbO4-cDc (0.90≤a≤1.8, 0≤b≤0.5, 0≤c≤0.05); LiaNi1-b-cCobXcO2-*α*D*α* (0.90≤a≤1.8, 0≤b≤0.5, 0≤c≤0.5, 0< *α*<2); LiaNi1-b-cMnbXcO2-*α*D*α* (0.90≤a≤1.8, 0≤b≤0.5, 0≤c≤0.5, 0< *α*<2); LiaNibCocL1dGeO2 (0.90≤a≤1.8, 0≤b≤0.9, 0≤c≤0.5, 0≤ d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤ 1.8, 0.001≤b≤0.1); LiaMn1-gGgPO4 (0.90≤a≤1.8, 0≤g≤0.5); Li(3-f)Fe2(PO4)3 (0≤f≤ 2); and LiaFePO4 (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one material selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more solvents.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a diagram of a structure of a pouch-type secondary battery 10 to which the electrode assembly 11 of FIG. 1 is applied.

As illustrated in FIG. 2, the electrode assembly 11 may be accommodated in an internal space 14a of a pouch 14. The pouch 14 is a container made of a flexible synthetic resin film and may include a main body 14c and a cover 14e. The main body 14c provides the internal space 14a capable of accommodating the electrode assembly 11. The internal space 14a is covered by the cover 14e.

Further, the first electrode tab 12a and the second electrode tab 12b of the electrode assembly 11 may be electrically connected to an external first terminal lead 13a and an external second terminal lead 13b, respectively. A tab film 13e for insulation from the external pouch may be attached to each of the first terminal lead 13a and the second terminal lead 13b. The first terminal lead 13a and the second terminal lead 13b may be connected to a circuit board or electrical components of a battery-applied product (e.g., an electrical device such as a mobile phone, a tablet, an electric fan, etc.).

A sealing portion is formed on an outer surface of the pouch 14. The sealing portion is a portion formed by fusing edges of the main body 14c and the cover 14e. In other words, the fused portion of the main body and cover is the sealing portion. The sealing portion is a portion for sealing the internal space 14a of the main body 14c.

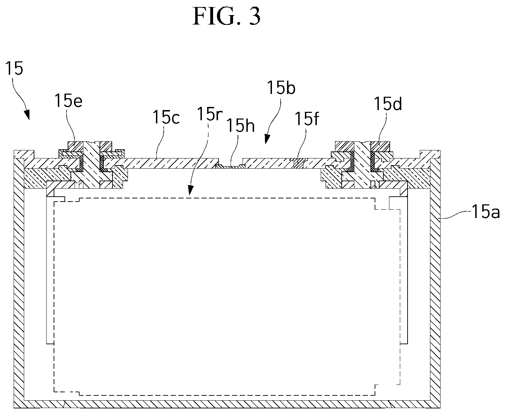

FIG. 3 is a diagram illustrating an internal structure of a prismatic secondary battery 15 in which an electrode plate manufactured using the apparatus for manufacturing the electrode plate for a secondary battery according to embodiments of the present disclosure is embedded, and FIG. 4 is a perspective view illustrating an external appearance of the prismatic secondary battery 15 illustrated in FIG. 3.

A battery can 15a may form the overall exterior of the prismatic secondary battery, and may be formed of a conductive metal, such as aluminum, an aluminum alloy, or nickel-plated steel. Further, the battery can 15a may provide a space in which an electrode assembly 15r is accommodated.

A cap assembly 15b may include a cap plate 15c that covers an opening of the battery can 15a. In some embodiments, the battery can 15a and the cap plate 15c may be made of a conductive material. A positive electrode terminal 15d and a negative electrode terminal 15e may be provided in the cap assembly 15b. The positive electrode terminal 15d and the negative electrode terminal 15e may be electrically connected to a positive electrode tab (not illustrated) and a negative electrode tab (not illustrated) of the electrode assembly 15r, respectively, and installed to be exposed to the outside of the cap plate 15c.

An electrolyte inlet 15f may be formed in the cap plate 15c, a gas discharge port 15g may be open, and a vent, that is, a gas vent 15h, may be bonded to the gas discharge port 15g. The gas vent 15h is open by gas generated inside the battery to perform a degassing function.

The electrode assembly 15r has a form in which a first electrode plate, a separator, and a second electrode plate are stacked. The electrode assembly 15r may be a Z-shaped stack electrode assembly in which a first electrode plate and a second electrode plate are inserted at both sides of a Z-shaped stack bent separator. The first electrode plate of the electrode assembly 15r may serve as a negative electrode, the second electrode plate may serve as a positive electrode, and vice versa.

The first electrode plate may be formed by coating a first electrode base substrate formed of a metal foil, such as copper, a copper alloy, nickel, or a nickel alloy, with a first electrode active material, such as graphite, carbon, or the like, and include a non-coated portion, which is a region in which the first electrode active material is not coated. The second electrode plate may be formed by coating a base substrate formed of a metal foil, such as aluminum or an aluminum alloy, with a second electrode active material, such as a transition metal oxide or the like, and include a non-coated portion, which is a region in which the second electrode active material is not coated.

The separator functions to prevent a short circuit between the first electrode plate and the second electrode plate while allowing the movement of lithium ions. The separator may be composed of, for example, a polyethylene film, a polypropylene film, a polyethylene-polypropylene film, or the like. In some embodiments, the electrode assembly 15r may be accommodated in the battery can 15a together with an electrolyte.

FIG. 5 is a perspective view of a secondary battery pack 18 in which the electrode plate manufactured using the apparatus for manufacturing the electrode plate for a secondary battery according to embodiments of the present disclosure is embedded.

The secondary battery pack 18 may be manufactured by embedding a plurality of secondary battery modules into a pack housing designed to be installed in an actual product. The pack housing may include fastening units and electrical outlets necessary for installation in the product. In FIG. 5, for convenience of illustration, related components, such as busbars for electrical connection of secondary batteries, a cooling unit, external terminals, etc. are omitted. The secondary battery pack may be mounted in a vehicle. The vehicle may be, for example, an electric vehicle, a hybrid vehicle, or a plug-in hybrid vehicle. The vehicle includes a four-wheel drive or two-wheel drive vehicle.

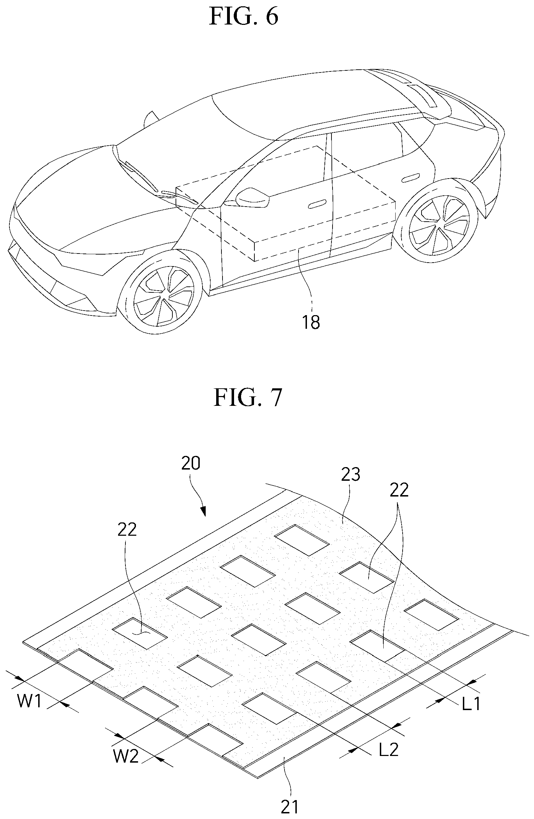

FIG. 6 is a diagram illustrating the secondary battery pack of FIG. 5 applied to a vehicle.

As illustrated, a secondary battery pack 18 according to embodiments of the present disclosure is mounted below a body of a vehicle. The vehicle operates by receiving power from the secondary battery pack 18 according to embodiments of the present disclosure.

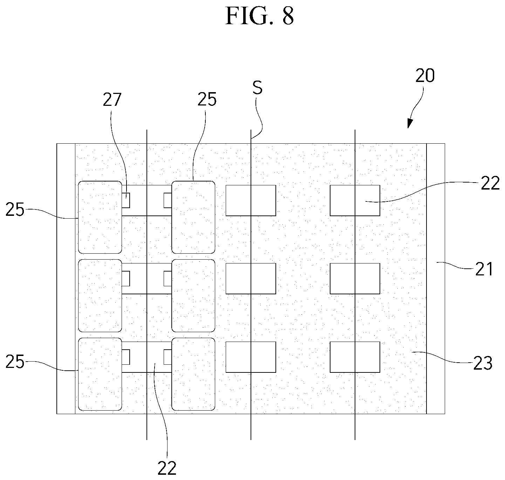

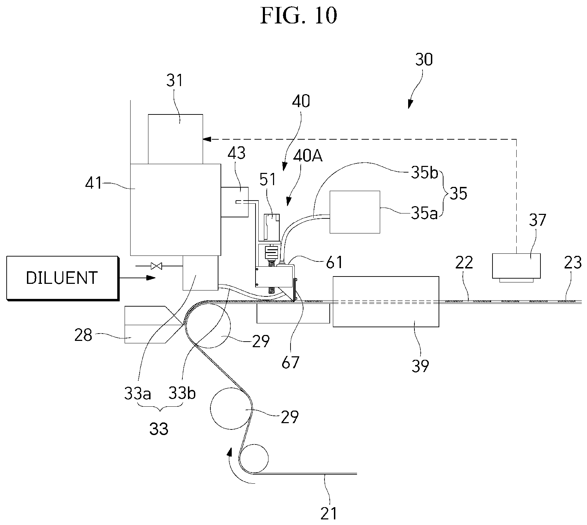

FIG. 7 is a diagram illustrating a portion of an electrode plate 20 manufactured using an apparatus 30 for manufacturing an electrode plate for a secondary battery according to embodiments of the present disclosure (e.g., see FIG. 10), and FIG. 8 is a diagram for describing a method of using the electrode plate 20 illustrated in FIG. 7.

As illustrated in FIG. 7, the electrode plate 20 has a structure in which a base substrate 21 and a mixture 23 are stacked. The mixture 23 is a slurry-type electrode material in which materials (e.g., an active material, a binder, etc.) are mixed, and the base substrate 21 is coated with the mixture 23 using a slot die 28 (e.g., see FIG. 10). The electrode plate 20 may be a positive electrode plate or a negative electrode plate. It should be understood that the base substrate 21 and the mixture 23 may vary according to whether the electrode is a positive electrode or a negative electrode.

A plurality of quadrangular non-coated portions 22 are formed in an inner region of the mixture 23. The non-coated portions 22 are portions formed by the apparatus 30 for manufacturing the electrode plate. That is, the non-coated portions 22 are exposed regions of the base substrate 21 after a slurry-type active material is removed by being scraped using a scraper 63 of the apparatus 30 for manufacturing the electrode plate.

Patterns, gaps, or areas of the non-coated portions 22 may vary. That is, lengths L1 of the non-coated portions 22 and a pattern gap L2 between the non-coated portions 22 in a longitudinal direction of the electrode plates 20, and widths W1 of the non-coated portions 22 and a width gap W2 between the non-coated portions 22 in a width direction may be changed.

By slitting the electrode plate 20 having the above configuration along slitting lines S and then punching the electrode plate 20 along punching lines 25, individual electrode plates may be obtained. The individual electrode plate includes a portion that is coated with a mixture and an exposed portion that is not coated with the mixture. The exposed portion is a portion of the non-coated portion 22 and serves as an electrode tab 27.

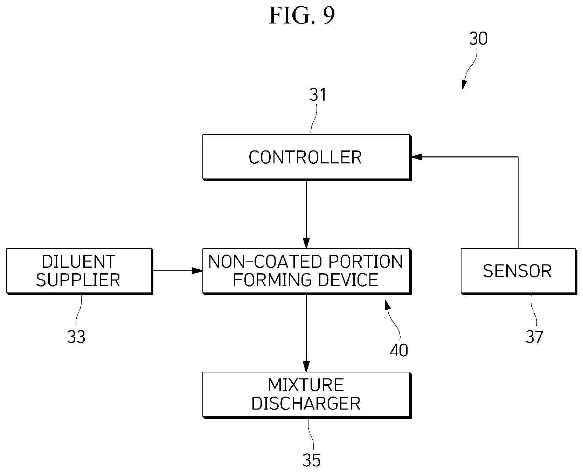

FIG. 9 is a blocking diagram illustrating the overall configuration of the apparatus 30 for manufacturing the electrode plate for a secondary battery according to embodiments of the present disclosure, and FIG. 10 is a diagram for describing the configuration and operation of the apparatus for manufacturing the electrode plate for a secondary battery illustrated in FIG. 9.

As illustrated, the apparatus 30 for manufacturing the electrode plate according to the present embodiment may include a non-coated portion forming device 40, a sensor 37, at least one controller 31, a diluent supplier 33, and a mixture discharger 35.

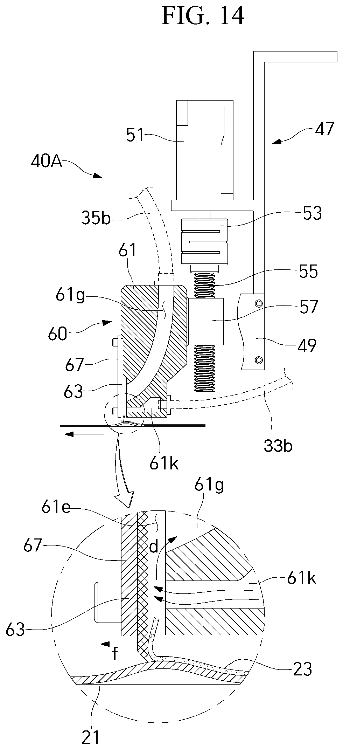

The non-coated portion forming device 40 is positioned to correspond to a transfer path for an electrode plate 20 with a predetermined width having a structure in which a base substrate 21 and a mixture 23 are stacked, and serves to form non-coated portions 22 by approaching the electrode plate 20 being transferred and partially and physically removing the mixture 23 from the base substrate 21. For example, the non-coated portions 22 are formed in the pattern illustrated in FIG. 7. The mixture 23 is removed using a scraping method. That is, the mixture 23 is physically scraped using a scraper 63 (see FIG. 14).

The base substrate 21 has a predetermined width and is transferred along the transfer path. A plurality of transfer rolls 29 are installed to transfer the base substrate 21. The base substrate 21 moves along a path provided by the transfer rolls 29 and passes through the slot die 28, the non-coated portion forming device 40, the dryer 39, and the sensor 37 sequentially. A transfer speed of the base substrate 21 may be maintained constant.

The slot die 28 allows the base substrate 21 to be coated with the mixture 23 being transferred at a predetermined width and thickness. Further, the mixture 23 may form a continuous electrode plate 20 together with the base substrate in a state in which the base substrate 21 is coated with the mixture 23.

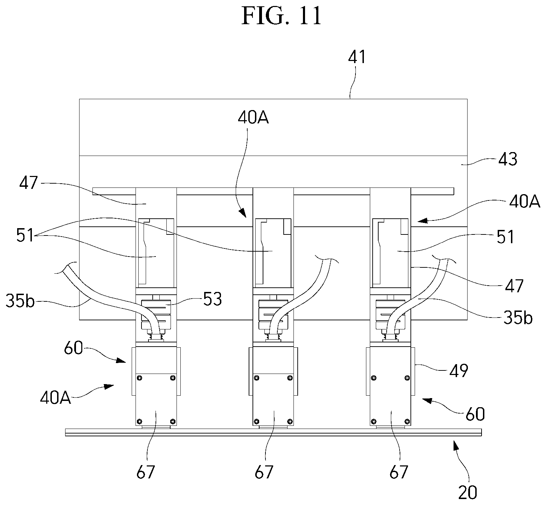

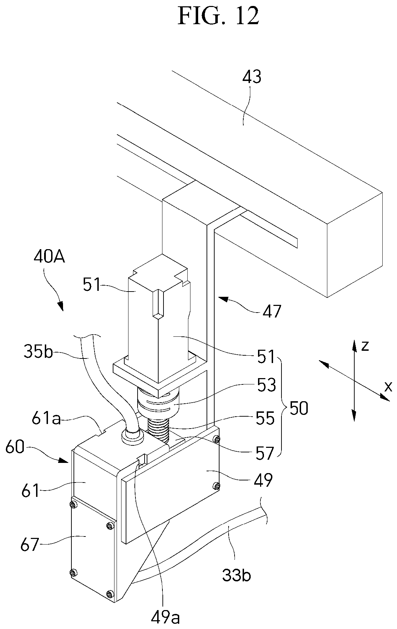

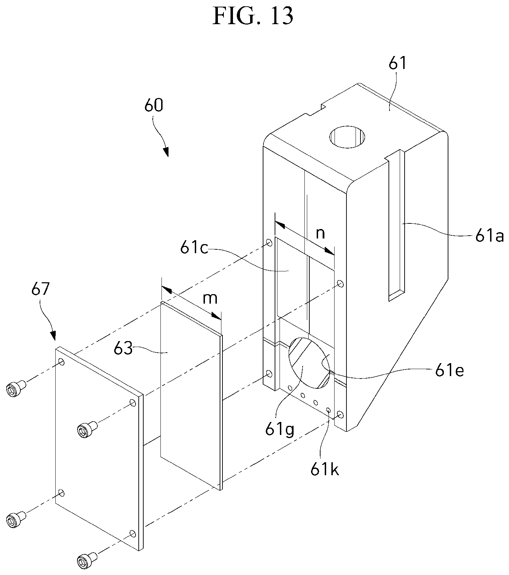

FIG. 11 is a front view of the non-coated portion forming device 40 of FIG. 10, and FIG. 12 is a perspective view separately illustrating a scraping device illustrated in FIG. 11. Further, FIG. 13 is an exploded perspective view of the scraping device of FIG. 12, and FIG. 14 is a partial cross-sectional view for describing an operating method of the scraping device.

The non-coated portion forming device 40 may include an X-motion actuator 43 and a plurality of scraping devices 40A.

The X-motion actuator 43 may be mounted on a supporting structure 41 and output a linear transferring force in the width direction of the electrode plate 20. That is, the X-motion actuator 43 causes the electrode plate 20 to reciprocate in the width direction, for example, in an X direction, while supporting the plurality of scraping devices 40A. The X-motion actuator 43 is positioned horizontally above the electrode plate 20 while supported by the supporting structure 41. As long as it can output a linear motion force, the X-motion actuator 43 may be implemented in various ways through various embodiments. For example, the X-motion actuator 43 may be implemented as an electric actuator.

Further, the X-motion actuator 43 may independently adjust the position of each scraping device 40A. That is, the X-motion actuator 43 may individually move each scraping device 40A. In this way, since the X-motion actuator 43 may individually adjust the positions of the scraping devices 40A, and a gap between the scraping devices 40A is adjustable.

The plurality of scraping devices 40A are arranged to be spaced apart from each other on the X-motion actuator 43. As described herein, the position of each scraping device 40A is adjustable in position in the width direction (X direction) of the electrode plate by the X-motion actuator 43. In addition, a scraper 63 is mounted on each scraping device 40A. The scraper 63 is a blade-shaped member that approaches the electrode plate and scrapes and removes the mixture.

The scraping device 40A may include a movable supporter 47, a Z-motion actuator 50, a suction head 60, and guide members 49.

The movable supporter 47 is a structure of which an upper end portion is supported by the X-motion actuator 43 and which is adjustable in position in the width direction of the electrode plate. Further, the Z-motion actuator 50 may be mounted on the movable supporter 47 and output a linear transferring force in a direction orthogonal to the width direction and transfer direction of the electrode plate, that is, in a Z direction. The Z-motion actuator 50 raises and lowers the suction head 60 in the Z direction.

The Z-motion actuator may include a motor 51, a coupling 53, a screw shaft 55, and a follower block 57. The motor 51 is fixed to the movable supporter 47 vertically and operated by a controller to output a bidirectional rotational force. A drive shaft of the motor 51 extends vertically toward the electrode plate 20.

The coupling 53 is a mechanical element connected to the drive shaft of the motor 51. The coupling 53 connects the drive shaft of the motor 51 to the screw shaft 55. The coupling may align central axes of the drive shaft of the motor and the screw shaft and absorb vibration. The screw shaft 55 is a vertical shaft in which threads are formed on an outer surface thereof and is axially rotated by receiving a rotational force of the motor 51.

The follower block 57 is a block-shaped member fixed to a body 61 of the suction head 60. The follower block 57 is screw-coupled to the screw shaft 55. Further, the follower block 57 may move linearly according to an axial rotation of the screw shaft 55. That is, the follower block 57 moves up and down above the electrode plate 20.

The guide members 49 are members that guide a vertical linear movement of the body 61 constituting the suction head 60. The guide members 49 have a quadrangular plate and are fixed to a lower end portion of the movable supporter 47. The guide members 49 are positioned at opposite sides with the body 61 interposed therebetween. In addition, vertical guide rails 49a are fixed to inner surfaces of the guide members 49. The guide rails 49a are inserted into side grooves 61a formed on two side surfaces of the body 61. As a result, the suction head 60 is restrained by the guide members 49 and only capable of vertical raising and lowering.

Meanwhile, the suction head 60 moves forward and backward with respect to the electrode plate 20 by the Z-motion actuator 50. That is, the suction head 60 approaches the electrode plate 20 being transferred and scrapes and removes the mixture 23. As illustrated in FIG. 13, the suction head 60 may include a body 61, a scraper 63, and a cover 67.

The body 61 is a member fixed to the follower block 57 and has a mounting groove 61c and a guiding space 61e in a front surface thereof. The mounting groove 61c is a groove for accommodating and fixing a portion of an upper portion of the scraper 63. A depth of the mounting groove 61c is equal to a thickness of the scraper 63. Further, a width n of the mounting groove 61c is equal to a width m of the scraper 63. The scraper 63 is supported by the cover 67 while inserted into the mounting groove 61c. An adhesive may be used to fix the scraper 63 to the mounting groove 61c.

Further, the guiding space 61e is a groove formed deeper than the mounting groove 61c in a lower portion of the mounting groove 61c. A width of the guiding space 61e is equal to a width of the mounting groove 61c. In addition, as illustrated in FIG. 14, the front of the guiding space 61e is blocked by the scraper 63. The guiding space 61e is open only in a downward direction. The guiding space 61e is a space that is formed between the body 61 and the scraper 63, is open downward, and guides a mixture of a mixture and a diluent to an internal passage 61g when the mixture discharger 35 which is described herein is operated.

In particular, as illustrated in FIG. 14, the internal passage 61g and a diluent passage 61k are provided inside the body 61. The internal passage 61g is a passage through which a slurry-type mixture 23 separated from the base substrate 21 passes through scraping. One end portion of the internal passage 61g may be open toward the scraper 63 covering the guiding space 61e, and the other end portion may be open to an upper portion of the body 61. The other end portion of the internal passage may also be open to a portion other than the upper portion of the body 61.

As described herein, when negative pressure is generated in the internal passage 61g, the separated mixture 23 rises through the guiding space 61e due to the action of the negative pressure and then suctioned into the internal passage 61g. Further, the mixture 23 may be discharged to the outside after passing through the internal passage 61g.

The diluent passage 61k is a passage provided below the internal passage 61g. The diluent passage 61k may receive and pass a diluent supplied through a supply pipe 33b. The diluent passing through the diluent passage 61k is spurted toward the scraper 63 and mixed with the mixture 23. The mixture of the mixture 23 and the diluent rises in a direction of arrow d due to the negative pressure described herein and is suctioned into the internal passage 61g.

The cover 67 is a plate-shaped member having a quadrangular plate shape. The cover 67 is coupled to a front surface of the body 61 with the scraper 63 interposed therebetween. The cover 67 may support the scraper 63 toward the body 61. That is, while the scraper 63 scrapes the mixture 23, the scraper 63 may be prevented from being separated from the body 61 due to a reaction force transmitted in a direction of arrow f.

Meanwhile, the diluent supplier 33 may supply a diluent to the diluent passage 61k of the body 61. That is, as illustrated in FIG. 14, when the scraper 63 scrapes the mixture 23, the diluent is applied to the scraper 63. The diluent passing through the diluent passage 61k hits the scraper 63, and then the mixture is mixed with the diluent and then suctioned into the internal passage 61g.

The diluent supplier 33 may include a pump 33a and the supply pipe 33b. The pump 33a may pump a prepared diluent and discharge the pumped diluent to the supply pipe 33b. The pump 33a may be controlled by the controller 31. Further, the supply pipe 33b is a flexible tube and may connect the pump 33a to the body 61. The diluent is transmitted to the diluent passage 61k through the supply pipe 33b.

The mixture discharger 35 may suction the mixture separated from the base substrate by the scraper 63 and discharge the suctioned mixture to the outside. The mixture discharger 35 may include a suction unit 35a and a discharge pipe 35b. The suction unit 35a may be a negative pressure pump controlled by the controller 31. The suction unit 35a may output vacuum pressure. The discharge pipe 35b is a flexible tube that connects the suction unit 35a to the other end portion of the internal passage 61g. When the suction unit 35a is operated, the air inside the guiding space 61e is suctioned into the internal passage 61g, and the guiding space 61e becomes in a state of negative pressure.

In this way, since the internal pressure of the guiding space 61e becomes negative, the electrode plate 20 passing through a lower portion of the scraper 63 is lifted upward by the action of the negative pressure. Even when the scraper 63 is not lowered toward the mixture 23, the mixture 23 rises toward the scraper 63, and thus the scraper 63 meets the mixture 23 and scrapes the mixture 23.

Furthermore, since scraping is performed under negative pressure, any mixed powder or foreign matter generated during the scraping process is immediately discharged.

The scraping method in which negative pressure is used allows the scraper to be mechanically lowered to prevent the scraper 63 from forcibly approaching a surface of the base substrate 21. When the scraper 63 is lowered to the surface of the base substrate, the surface of the base substrate may be slightly damaged by friction between the scraper and the base substrate.

In this way, the negative pressure-based scraping method is also advantageous in terms of device lifetime and maintenance. Since the scraper avoids direct friction with the base substrate, wear on the scraper itself may be minimized, resulting in longer replacement cycles and less frequent maintenance. In addition, since repeated friction is not applied to the surface of the base substrate, the quality stability and consistency of the base substrate may be secured.

Referring to FIG. 10 again, it can be seen that the dryer 39 is positioned downstream of the non-coated portion forming device 40. The dryer 39 may dry the mixture 23 in a slurry state.

Further, the electrode plate 20 passing through the dryer 39 passes a lower portion of the sensor 37. The sensor 37 detects areas of and gaps between the non-coated portions 22 formed by the non-coated portion forming device 40. That is, the lengths L1 of the non-coated portions, the pattern gap L2 between the non-coated portions, the widths W1 of the non-coated portions, and the width gap W2 between the non-coated portions that are illustrated in FIG. 7 may be monitored. Sensing information detected by the sensor 37 is transmitted to the controller 31.

The controller 31 may control the operation of the non-coated portion forming device 40 on the basis of the sensing information received from the sensor 37. For example, when correction is required for the width gap W2 between the non-coated portions, the controller 31 controls the X-motion actuator 43 to adjust a gap between the scraping devices 40A.

Further, when correction is required for the lengths L1 of the non-coated portions or the pattern gap L2 between the non-coated portions, the operation of the motor 51 is controlled. A time period for which the scraper 63 is lowered and a time period for which the scraper 63 rises are adjusted. For example, when the length L1 of the non-coated portion is shorter than a design value, a time period for which the scraper remains in a lowered state is increased. Conversely, when the length L1 of the non-coated portion is longer than the design value, the time period for which the scraper remains in the lowered state is shortened, and thus the length of the non-coated portion is reduced.

In the same manner, when a length of the pattern gap L2 is longer than a normal length, a time period for which the scraper 63 remains in a rising state is reduced. Further, when the length of the pattern gap L2 is shorter than the normal length, the time period for which the scraper remains in the rising state is increased.

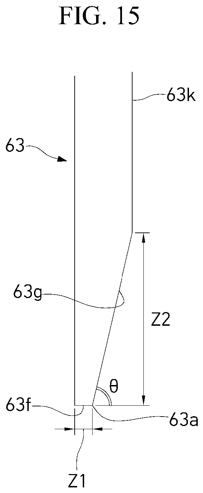

FIGS. 15 to 18 are diagrams illustrating various implementation examples of various scrapers 63 applicable to the apparatus for manufacturing the electrode plate for a secondary battery according to embodiments of the present disclosure.

A scraper 63 illustrated in FIG. 15 may include a lower end surface 63f, a first inclined surface 63g, and a vertical surface 63k. A blade 63a is formed at a boundary between the lower end surface 63f and the first inclined surface 63g. The sizes of each portion of the scraper 63 may be modified in various embodiments. For example, a width Z1 of the lower end surface 63f may be 0.3 mm, and a height Z2 of the first inclined surface 63g may be 3 mm. These specifications are merely examples and may be modified in other embodiments.

An angle θ between the first inclined surface 63g and a horizontal plane may range from 45 degrees to 80 degrees.

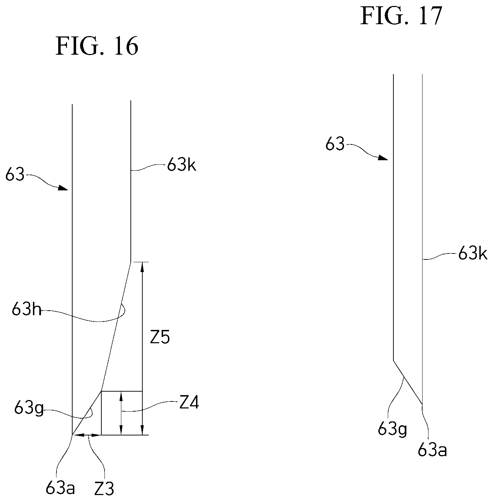

A scraper 63 of FIG. 16 has a first inclined surface 63g, a second inclined surface 63h, and a vertical surface 63k. A lower end portion of the first inclined surface 63g is a blade 63a. A horizontal width Z3 of the first inclined surface 63g may be 0.42 mm, and a vertical height Z4 may be 0.5 mm. Further, a height Z5 from the blade 63a to an upper end of the second inclined surface 63h may be 3 mm.

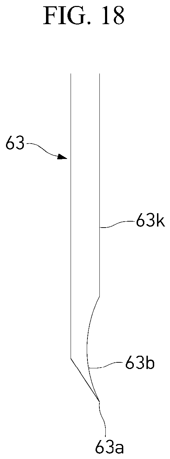

A scraper 63 of FIG. 17 has a blade 63a at a lower end thereof, and a first inclined surface 63g is formed on an upper side of the blade 63a. Further, a scraper 63 illustrated in FIG. 18 has a guiding groove 63b on an upper side of the blade 63a. The guiding groove 63b may guide the mixture 23 separated from the base substrate 21 upwardly toward the internal passage 61g.

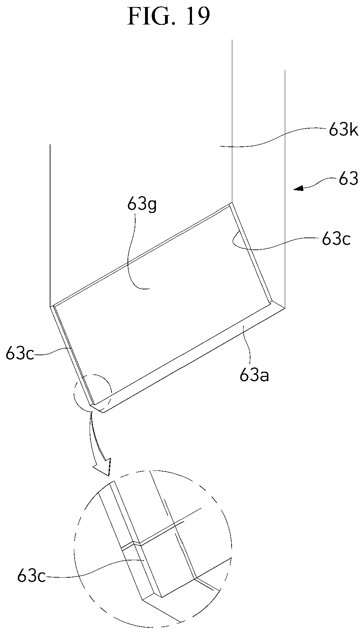

FIG. 19 is a diagram illustrating a modified example of the scraper of FIG. 15.

As illustrated, separation preventing protrusions 63c may be formed at two edges of the first inclined surface 63g. The separation preventing protrusions 63c may suppress the mixture 23, which rises above the base substrate 21 after being scraped by the blade 63a, from falling outward in a width direction of the scraper 63.

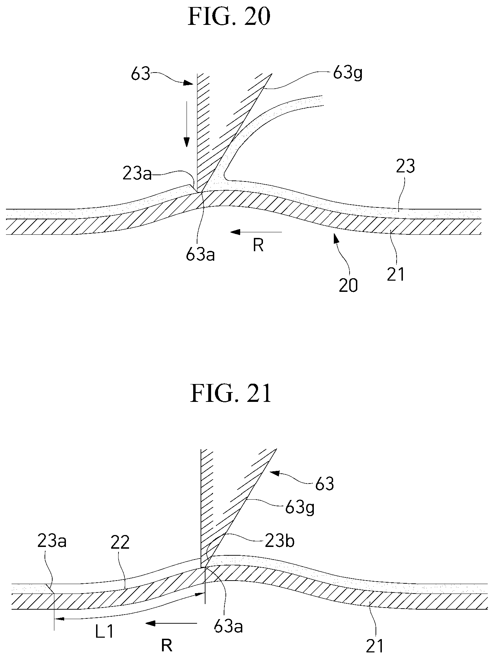

FIGS. 20 to 22 are diagrams illustrating a process of removing a mixture using the apparatus for manufacturing the electrode plate for a secondary battery according to embodiments of the present disclosure in sequence, and are also diagrams for further describing the advantages of the scraper 63 having the first inclined surface 63g illustrated in FIGS. 15 and 16.

As illustrated, the electrode plate 20, which passes under the scraper 63 in a direction of arrow R, is lifted upward by the action of negative pressure and meets the blade 63a of the scraper 63. Further, the blade 63a of the scraper 63 is lowered from a surface of a mixture layer to a surface of the base substrate 21.

However, since the electrode plate 20 moves in the direction of arrow R during a time period for which the scraper 63 is lowered, an inclined first inwardly inclined surface 23a is eventually formed in the mixture 23. When a lowering speed of the scraper 63 and a transfer speed of the electrode plate are the same per unit time, an angle of the first inwardly inclined surface 23a becomes 45 degrees. This means that the angle of the first inwardly inclined surface 23a may be adjusted by adjusting a ratio of the lowering speed of the scraper 63 to the transfer speed of the electrode plate 20.

The mixture 23 separated from the scraper 63 rises from the bottom of the first inclined surface 63g, is suctioned up by the action of the negative pressure described herein, and then is removed.

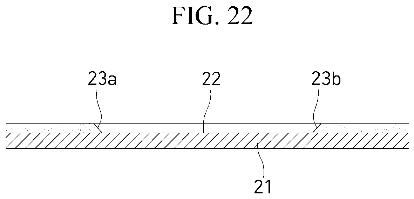

FIG. 21 is a diagram illustrating the appearance at the moment when scraping of the length L1 of the non-coated portion is completed, and FIG. 22 illustrates the appearance of the electrode plate 20 after the scraper 63 rises. As illustrated, a second inwardly inclined surface 23b is formed opposite the first inwardly inclined surface 23a. The second inwardly inclined surface 23b is a portion formed by being pressed by the first inclined surface 63g of the scraper 63. In this way, by forming the inwardly inclined portions 23a and 23b at both sides facing the inside of the non-coated portion 22, two ends of the non-coated portion form smooth and continuous inclines with respect to the surface of the base substrate 21, thereby preventing the separation phenomenon or inward collapse of the mixture in subsequent processes.

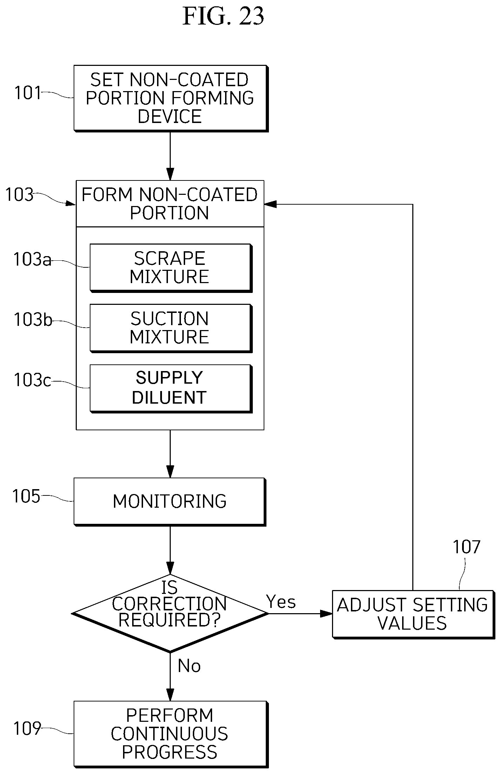

FIG. 23 is a flowchart for describing a method of manufacturing an electrode plate for a secondary battery according to embodiments of the present disclosure.

As illustrated, the method of manufacturing the electrode plate according to the present embodiment may include a non-coated portion forming device setting operation 101, a non-coated portion forming operation 103, a monitoring operation 105, a setting value adjusting operation 107, and a continuous progress operation 109.

The non-coated portion forming device setting operation 101 is a process of setting operation conditions of a non-coated portion forming device 40 installed above an electrode plate 20. For example, a gap between adjacent scraping devices 40A, a lowering or raising speed of a scraper 63, and the number of times the scraper 63 is raised or lowered during a predetermined period of time are input. These setting values are stored in a controller 31. Lengths L1, pattern gap L2, and width gap W2 of non-coated portions may be determined according to the setting values.

The subsequent non-coated portion forming operation 103 is a process of, while the electrode plate 20 moves, allowing the scraper 63 to repeatedly approach the electrode plate 20 and allowing the scraper 63 to partially scrape off a mixture 23 to form non-coated portions 22. The non-coated portion forming operation 103 may include a scraping process 103a, a suctioning process 103b, and a dilution supply process 103c.

The scraping process 103a is a process of lowering the scraper 63 to remove the mixture 23. The lowering and raising of the scraper 63 may be realized by a motor 51. The suctioning process 103b is a process of suctioning the mixture 23 removed from a base substrate and discharging the mixture 23 to the outside. That is, as described herein, a suction unit 35a that outputs vacuum pressure is driven to suction up the mixture 23 and remove the mixture 23 to the outside.

Further, the dilution supply process 103c is a process of applying a diluent to the mixture 23 suctioned into an internal passage 61g. That is, the diluent supplied from a diluent supplier 33 is spurted through a diluent passage 61k to guide the mixture 23 to be mixed with the diluent.

The monitoring operation 105 is a process performed after the completion of the non-coated portion forming operation 103 and is a process of detecting areas of and gaps between the formed non-coated portions 22. The sensor 37 detects information on the areas of and gaps between the non-coated portions 22 and transmits the detected information to the controller 31. The controller 31 may determine whether the non-coated portions 22 are formed at the originally designed areas and gaps, on the basis of the detected information.

As a result of the determination of the controller 31, when it is determined that the non-coated portions 22 are formed at the designed positions and sizes, the continuous progress operation 109 is performed. The continuous progress operation 109 means a process in which the operation is performed without correcting the setting values of the non-coated portion forming device.

However, as a result of the determination of the controller 31, when it is determined that correction of the lengths L1 or pattern gap L2 of the non-coated portions 22 is required, the setting value adjusting operation 107 is performed. The setting value adjusting operation 107 is a process of readjusting the setting values of the non-coated portion forming device 40.

According to the method of manufacturing the electrode plate of the present embodiment configured as described herein, by partially removing the mixture 23 from the surface of the electrode plate 20 using the rising scraper 63, various shapes of non-coated portions can be formed. Further, by monitoring the formation status of non-coated portions in real time and correcting the setting values as necessary, process continuity and quality uniformity can be secured.

As described herein, according to the present disclosure, it is possible to significantly improve the quality of the electrode plate and the stability of the process by precisely forming non-coated portions on the electrode plate based on a scraping method and efficiently performing the process of diluting and discharging the separated mixture. Further, by implementing a structure in which the size and gap precision of the non-coated portions can be monitored in real time and accordingly, the control conditions can be actively adjusted, it is possible to flexibly respond to various electrode design requirements.

The apparatus for manufacturing the electrode plate for a secondary battery of the present disclosure configured as described herein can precisely and easily form various shapes of non-coated portion patterns by physically scraping a coating mixture formed on an electrode plate moving along a transfer path. Further, it is possible to effectively discharge the mixture separated from a base substrate by including a dilution injection structure, thereby improving the continuity and stability of the process.

Effects of the present disclosure are not limited to those described herein, and other effects not specifically mentioned herein will be clearly understood by those skilled in the art from the description of the present disclosure herein.

## Claims

1. An apparatus (30) for manufacturing an electrode plate (11a, 11c, 20) for a secondary battery (10, 15), the apparatus (30) comprising:
a non-coated portion (22) forming device positioned to correspond to a transfer path for an electrode plate (11a, 11c, 20) having a predetermined width and comprising a structure (41) in which a base substrate (21) and a mixture (23) are stacked, wherein the non-coated portion (22) forming device is configured to form non-coated portions (22) by approaching the electrode plate (11a, 11c, 20) being transferred and partially removing the mixture (23) from the base substrate (21);
a sensor (37) configured to detect areas of and gaps between the non-coated portions (22) formed by the non-coated portion (22) forming device; and
at least one controller configured to receive sensing information from the sensor (37) and control an operation (101, 103, 109) of the non-coated portion (22) forming device.

2. The apparatus (30) as claimed in claim 1, wherein the non-coated portion (22) forming device comprises:
an X-motion actuator (43) that outputs a transferring force in a width direction of the electrode plate (11a, 11c, 20); and
one or more scraping devices (40A) that are adjustable in position in the width direction of the electrode plate (11a, 11c, 20) by the X-motion actuator (43) and that have a scraper (63) for approaching the electrode plate (11a, 11c, 20) and scraping and removing the mixture (23).

3. The apparatus (30) as claimed in claim 2, wherein the one or more scraping devices (40A) are provided as a plurality of scraping devices (40A), and the plurality of scraping devices (40A) are arranged to be spaced apart from each other on the X-motion actuator (43).

4. The apparatus (30) as claimed in claim 2 or 3, wherein the one or more scraping devices (40A) comprises:
a movable supporter (47) which is supported by the X-motion actuator (43) and adjustable in position in the width direction of the electrode plate (11a, 11c, 20);
a Z-motion actuator (50) which is installed on the movable supporter (47) and outputs a transferring force in a direction orthogonal to the width direction and a transfer direction of the electrode plate (11a, 11c, 20); and
a body (14c, 61) which is moved forward and backward with respect to the electrode plate (11a, 11c, 20) by the Z-motion actuator (50) and supports the scraper (63).

5. The apparatus (30) as claimed in claim 4, further comprising a mixture discharger (35) configured to suction at least a portion of the mixture (23), the at least the portion of the mixture (23) being separated from the base substrate (21) by the scraper (63) and discharge the mixture (23) to the outside.

6. The apparatus (30) as claimed in claim 5, wherein an internal passage (61g), through which the separated at least a portion of the mixture (23) passes, and which has one end portion open toward the scraper (63) and another end portion open upward from the body (14c, 61), is formed inside the body (14c, 61), and
the mixture discharger (35) has a suction unit (35a) that outputs vacuum pressure, and a discharge pipe (35b) that connects the suction unit (35a) to the other end portion of the internal passage (61g).

7. The apparatus (30) as claimed in claim 6, further comprising a diluent supplier (33) configured to apply a diluent to the scraper (63) when the scraper (63) scrapes the mixture (23) so that the separated mixture (23) is mixed with the diluent and suctioned into the internal passage (61g).

8. The apparatus (30) as claimed in claim 7, wherein a diluent passage (61k), through which the diluent supplied from the outside passes and which is open toward the scraper (63), is further formed inside the body (14c, 61), and
the diluent supplier (33) includes a pump (33a) that supplies a diluent and a supply pipe (33b) that guides the diluent supplied from the pump (33a) to the diluent passage (61k).

9. The apparatus (30) as claimed in any one of claims 4 to 8, wherein the Z-motion actuator (50) comprises:
a motor (51) that is fixed to the movable supporter (47) and operated by the at least one controller to output a bidirectional rotational force;
a screw shaft (55) that is connected to a drive shaft of the motor (51) and extends vertically; and
a follower block (57) that is screw-coupled to the screw shaft (55) while fixed to the body (14c, 61) and moves linearly according to an axial rotation of the screw shaft (55).

10. The apparatus (30) as claimed in any one of claims 4 to 9, wherein the movable supporter (47) further comprises a guide member (49) that guides a linear movement of the body (14c, 61).

11. The apparatus (30) as claimed in claim 8, wherein a guiding space (61e) that guides the mixture (23) and the diluent to the internal passage (61g) is provided between the body (14c, 61) and the scraper (63).

12. A method of manufacturing an electrode plate (11a, 11c, 20) for a secondary battery (10, 15), which is performed by an apparatus (30) for manufacturing the electrode plate (11a, 11c, 20) for the secondary battery (10, 15), the method comprising:
a non-coated portion (22) forming device setting operation (101, 103, 109) of setting operation (101, 103, 109) conditions of a non-coated portion (22) forming device which has a structure (41) in which a base substrate (21) and a mixture (23) are stacked and which comprises a scraper (63) for approaching an electrode plate (11a, 11c, 20) transferred along a transfer path and partially removing the mixture (23) from the electrode plate (11a, 11c, 20); and
a non-coated portion (22) forming operation (101, 103, 109) having a scraping process (103a) of, while the electrode plate (11a, 11c, 20) moves, allowing the scraper (63) to repeatedly approach the electrode plate (11a, 11c, 20) and allowing the scraper (63) to partially remove the mixture (23) to form non-coated portions (22).

13. The method as claimed in claim 12, further comprising a monitoring operation (105) of detecting areas of and gaps between the non-coated portions (22) formed in the non-coated portion (22) forming operation (101, 103, 109).

14. The method as claimed in claim 13, further comprising a setting value adjusting operation (107) of adjusting setting values of the non-coated portion (22) forming device when it is determined that the areas of and gaps between the non-coated portions (22) need to be corrected as a result of monitoring through the monitoring operation (105).

15. The method as claimed in any one of claims 12 to 14, wherein the non-coated portion (22) forming operation (101, 103, 109) further comprises a suctioning process (103b) of suctioning a mixture (23) removed from the base substrate (21) and discharging the mixture (23) to the outside.
